# EUROPEAN PATENT APPLICATION

(11) **EP 4 454 731 A1**
(43) Date of publication of application: **30.10.2024**
(21) Application number: 23170712.6
(22) Date of filing: 28.04.2023
(51) Int. Cl.: B01D 29/11, B01D 35/14, B01D 35/30

(54) **FILTER ASSEMBLIES AND RELATED FILTER ELEMENTS**

(71) Applicant: Donaldson Company, Inc., Bloomington, MN 55431 (US)
(72) Inventor: KRYSTUFEK, Miloslav, Bloomington, 55431 (US); CATOOR, Bart, Bloomington, 55431 (US); VERSTRAETE, Mathijs, Bloomington, 55431 (US); KLAVER, Tom, Bloomington, 55431 (US)
(74) Representative: IPLodge bv

(57) **Abstract**

The present disclosure relates to a fluid filter assembly comprising:
- a filter housing for receiving a replaceable filter element;
- a filter element operably arranged within the filter housing and comprising a first end cap connected to a first end of a fluid filtration media;
wherein the filter housing comprises a first housing part and a second housing part; and wherein the first end cap is adapted for releasable attachment to the first housing part and adapted for releasable attachment to the second housing part and for, preferably in a sealing manner, connecting the first housing part and the second housing part; related filter elements and adaptors for use with the fluid filter assembly.

## Description

### Field of the disclosure

This disclosure concerns filter assemblies and filter elements. In particular, this disclosure concerns bowl/cartridge filter assemblies for filtering liquids, such as fuel, lubrication fluids, such as oil, and hydraulic fluids.

### Background

Filter elements, also named filter cartridges, are used for a wide variety of filtering applications and the fluid to be filtered can be a liquid or a gas.

In many instances, it is desired to filter contaminant material from a fluid stream. For example, liquid flow to engines for motorized vehicles, or for use in hydraulic equipment, comprises particulate contaminant therein. It is preferred for such systems that contaminant materials be removed from the fluid or at least be reduced in order to reduce damage risk for the equipment.

Filter elements comprise filter media for removing contaminant materials when the fluid flows through the filter media. Commonly used and commercially available filter media are for example pleated media or fluted media. When the filter media is loaded with particles above a certain threshold load, a filter element needs to be replaced. Filter elements are typically installed in the housing in a replaceable manner.

A special category of filter assemblies in the liquid filtration domain are bowl/cartridge filters. Such assemblies comprise a filter bowl comprising an internal volume and a main opening for receiving a filter element, a filter element operably arranged within the filter bowl, and a filter head for receiving an incoming fluid flow and guiding it towards the fluid filtration media and for receiving an outgoing fluid flow from the filter element. The filter bowl can for instance be attached to the filter head in a sealing manner by means of a threaded connection and a suitably arranged seal. Bowl/cartridge filter assemblies exist in both standing and hanging configurations.

Many bowl/cartridge type assemblies allow the flow of respective liquids even if there is no filter element installed, increasing the risk of damage to the equipment.

There is a need in industry for filters of the bowl/cartridge type that avoid the above-mentioned problem.

### Summary

It is an object of embodiments of the present disclosure to provide a filtration assembly that does not allow the associated equipment to operate if no suitable filter element is installed.

The present invention is defined in the appended independent claims. The dependent claims define advantageous embodiments.

In a first aspect of the present disclosure, a fluid filter assembly is disclosed comprising:
- a filter housing for receiving a replaceable filter element;
- a filter element operably arranged within the filter housing and comprising a first end cap connected to a first end of a fluid filtration media;
wherein the filter housing comprises a first housing part and a second housing part; and wherein the first end cap is adapted for releasable attachment to the first housing part and adapted for releasable attachment to the second housing part and for, preferably in a sealing manner, connecting the first housing part and the second housing part.

It is an advantage that a filtration assembly is provided that does not allow the installation of the filter bowl to the filter head without the presence of a correct filter element.

In preferred embodiments of a first type, of the hanging type, the assembly comprises
- a filter bowl corresponding to the first housing part and comprising an internal volume and a main opening for receiving the filter element;
- the filter element operably arranged within the filter bowl and comprising the first end cap connected to the first end of a fluid filtration media;
- a filter head, corresponding to the second housing part, for receiving an incoming fluid flow and guiding it towards the fluid filtration media and for receiving an outgoing fluid flow from the filter element;
wherein the first end cap is adapted for releasable attachment to the filter head and adapted for releasable attachment to the filter bowl and for, preferably in a sealing manner, connecting the filter bowl to the filter head.

For the purpose of the present disclosure, "releasable attachment" refers to an attachment which can be released without damaging any of the respective components which are attached to one another.

According to preferred embodiments, the filter bowl and the first end cap are adapted for releasable attachment by means of a threaded connection comprising a first and a second complementary screw thread provided on the filter bowl and on the first end cap respectively.

According to preferred embodiments, the first screw thread is provided at the main opening and the first end cap comprises an interrupted second screw thread.

According to preferred embodiments, the first screw thread at the main opening is directed radially outwardly and the second screw thread is directed radially inwardly.

According to preferred embodiments of a first type, the filter head and the filter element are further adapted for being attached by means of a bayonet-type connection system, the filter head comprising a first part of a bayonet connection system, and the filter element comprising a second part of the bayonet connection system.

Preferably, the bayonet connection system is adapted for providing a bayonet-type connection when the filter element is rotated into the filter head in the same direction of screwing on the filter bowl onto the end cap by means of the threaded connection.

In certain preferred embodiments, the first part of the bayonet connection system comprises radially inwardly extending ribs, preferably ending on a stopper surface, arranged on a cylindrical inner surface of the filter head.

Preferably, the end cap comprises a set of regularly angularly distributed radially extending threaded sectors comprising respective sections of the second screw thread, alternating with a set of regularly distributed radial cut-outs. Preferably, the second part of the bayonet connection system is embodied by a lower rim of the set of regularly distributed radially extending sectors of the end cap.

Preferably, the filter bowl has a cylindrical inner surface, and the radial cut-outs extend radially inwardly beyond the inner surface, to thereby provide an entry path for fluid into the bowl and towards the filtration media.

Preferably, the end cap comprises a central end cap portion, and the regularly distributed radially extending threaded sectors extend radially from the central end cap portion and comprise an interrupted axially extending circumferential sidewall portion comprising the interrupted second screw thread.

In certain alternative embodiments, the first part of the bayonet connection system comprises radially inwardly extending protrusions arranged on a cylindrical inner surface of the filter head and the second part of the bayonet connection system comprises openings in a sidewall of the first end cap of the filter element adapted and arranged for coupling with the protrusions.

Preferably, the first end cap comprises a plurality of fluid inlet openings on an axial end face of the first end cap, an axial projection of which is laying outside an axial projection of the fluid filtration media.

In certain still further alternative embodiments, the first part of the bayonet connection system comprises at least one circumferentially arranged recess with opening in an axial direction, arranged on a cylindrical inner surface of the filter head, and the end cap comprises a set of regularly angularly distributed radially extending threaded sectors comprising respective sections of the second screw thread, angularly separated from and alternating with a set of regularly angularly distributed mainly radially extending bayonet lips or wings arranged and adapted for being received in the at least one circumferentially extending recess.

According to preferred embodiments of a first type, the filter head and the filter element are adapted for being attached by means of a snap-fit type connection system, the filter head comprises a first part of a snap-fit connection system, and the filter element comprises a second part of the snap-fit connection system.

Preferably, the first end cap comprises a set of regularly angularly distributed radially extending threaded sectors comprising respective sections of the second screw thread, alternating with a set of regularly distributed radial cut-outs, and the second part of the snap-fit connection system is embodied by the radially extending sectors of the end cap which are adapted and arranged to be radially resilient.

Preferably, the filter bowl has a cylindrical inner surface, and the radial cut-outs extend radially inwardly beyond the inner surface, to thereby provide an entry path for fluid into the bowl and towards the filter media.

Preferably, the first end cap comprises a central end cap portion, and the regularly distributed radially extending threaded sectors extend radially from the central end cap portion and comprise respective mainly axially extending circumferential sidewall portions comprising the interrupted complementary thread, the axially extending sidewall portions being resilient when deformed radially outwardly.

Preferably, the mainly axially extending circumferential sidewall portions extend slightly radially inward and are adapted for receiving an upper rim of the filter bowl during installation, and the upper rim of the filter bowl is adapted for biasing the mainly axially extending circumferential sidewall portions to move radially outward, e.g., to become axially extending, during installation. After attachment of the bowl to the end cap and indirectly to the filter head, the end cap has then opened up behind an undercut rim embodying the first part of the snap fit connection, the undercut rim being arranged on an inner surface of the filter head.

In combination with any of the preferred embodiments, preferably, the first end cap further comprises an outlet tube in fluid communication with an internal volume of the filter media, and comprises a circumferential radial seal member arranged around the outlet tube.

In combination with any of the preferred embodiments, preferably, the filter bowl comprises an outer cylindrical surface and a comprises a radially directed seal adapted for sealing to the filter head when the filter bowl is fully connected to the filter head.

In combination with any of the preferred embodiments, preferably, the fluid filter assembly is adapted such that a rotational force needed for attaching the end cap to the filter head is smaller than a rotational force needed for connecting the filter bowl to the end cap.

In combination with any of the preferred embodiments, preferably, the fluid filter assembly is adapted such that a rotational force needed for removing the end cap from the filter head is smaller than a rotational force needed for removing the filter bowl from the end cap.

In preferred embodiments of a second type, of the standing type, the assembly comprises:
- a filter head corresponding to the second housing part and comprising an internal volume and a main opening for receiving the filter element, and for receiving an incoming fluid flow and guiding it towards the fluid filtration media and for receiving an outgoing fluid flow from the filter element;
- the filter element operably arranged within the filter head and comprising the first end cap connected to the first end of a fluid filtration media;
- a housing cover, corresponding to the first housing part, wherein the first end cap is adapted for releasable attachment to the filter head and adapted for releasable attachment to the housing cover and for, preferably in a sealing manner, connecting the housing cover to the filter head.

Preferably, the housing cover and the end cap are adapted for releasable attachment by means of a threaded connection comprising a first and a second complementary screw thread provided on the housing cover and on the end cap respectively.

Preferably, the first screw thread is provided on a cylindrical projection projecting from an inner surface of the housing cover and the first end cap comprises an interrupted second screw thread provided along interrupted sections of a cylindrical projection projecting from the end cap in a direction away from the filtration media.

Preferably, the first screw thread is directed radially outwardly, and the second screw thread is directed radially inwardly.

Preferably, the filter head and the filter element are adapted for being attached by means of a bayonet-type connection system, the filter head comprising a first part of a bayonet connection system, and the filter element, preferably the end cap, comprising a second part of the bayonet connection system.

Preferably, the end cap comprises a set of regularly angularly distributed radially extending threaded sectors comprising respective sections of the second screw thread, alternating with a set of regularly distributed radial cut-outs.

Preferably, the second part of the bayonet connection system is embodied by a lower or upper rim of the set of regularly distributed radially extending sectors of the end cap and the first part of the bayonet connection system is embodied by one or more bayonet features arranged on an inner surface, e.g., inner side surface of the filter head.

In a second aspect of the present disclosure, a fluid filter element is disclosed, comprising a first end cap connected to a first end of a fluid filtration media. The first end cap comprises a set of regularly distributed radially extending sectors comprising sections of a thread, alternating with a set of regularly distributed radial cut-outs.

According to preferred embodiments, the thread is directed radially inwardly.

According to preferred embodiments, the radial cut-outs extend from a circular periphery of the end cap towards the filtration media, and an axial projection of the cut-outs remains outside of an axial projection of the filter media.

According to preferred embodiments, the end cap comprises a central end cap portion, and the regularly distributed radially extending sectors extend radially from the central end cap portion and comprise an interrupted axially extending circumferential sidewall portion comprising the thread.

According to preferred embodiments, the regularly distributed radially extending sectors comprise first portions radially extending from the central end cap portion and second portions axially extending from outward ends of the first portions, in a direction towards the filtration media.

According to preferred embodiments, a radial distance measured in a direction perpendicular to a longitudinal axis of the filter element, between the central end cap portion and the second portions of the regularly distributed radially extending sectors is at least 5 mm (and for instance less than 10 mm).

According to preferred embodiments, the first end cap comprises an internal surface comprising an axially extending ring-shaped cavity adapted for receiving the first end of the fluid filtration media, the ring-shaped cavity comprising an outer circular rib and an inner circular rib, the outer and inner ribs being arranged concentrically.

According to preferred embodiments, a radial distance measured in a direction perpendicular to a longitudinal axis of the filter element, between an outer surface of the outer circular rib and the second screw thread is within the range of 3 to 5 mm.

According to preferred embodiments, the end cap comprises a ring-shaped bowl-receiving cavity for receiving an upper rim of a predetermined filter bowl, preferably having complementary shape thereof.

According to preferred embodiments, the end cap further comprises an outlet tube in fluid communication with an internal volume of the filtration media, and a circumferential radial seal member around the outlet tube.

According to preferred embodiments, an axial projection of the radial seal member lies within an axial projection of the central end cap portion.

According to preferred embodiments, the filter element further comprises a second, closed end cap at a second end of the fluid filtration media.

According to preferred embodiments, the fluid filter media is a pleated filter media arranged in a tubular configuration. Alternatively, the fluid filter media or filtration media can comprise a wound tissue or non-woven material arranged in a tubular configuration.

According to preferred embodiments, the radially extending sectors of the first end cap are adapted and arranged to be radially resilient.

According to preferred embodiments, the end cap comprises a central end cap portion, and the regularly distributed radially extending threaded sectors extend radially from the central end cap portion and comprise respective mainly axially extending circumferential sidewall portions comprising the interrupted complementary thread, and the mainly axially extending sidewall portions also extend slightly radially inwardly when moving to their respective distal free ends, and are resilient when deformed or bent radially outwardly.

In a third aspect of the present disclosure, a fluid filter element is disclosed comprising a first end cap connected to a first end of a fluid filtration media; wherein the first end cap comprises a circumferential axially extending sidewall and wherein the sidewall comprises openings or recesses adapted and arranged for coupling with protrusions arranged on an internal wall of a corresponding filter bowl.

According to preferred embodiments, the first end cap comprises a screw thread on an internal surface of the sidewall.

According to preferred embodiments, an axial end face of the first end cap further comprises a plurality of fluid inlet openings, an axial projection of which is laying outside an axial projection of the fluid filtration media.

In a fourth aspect of the present disclosure, a fluid filter element is disclosed comprising a first end cap connected to a first end of a fluid filtration media; wherein the end cap comprises a set of regularly angularly distributed radially extending threaded sectors comprising respective sections of a screw thread, angularly separated from and alternating with a set of regularly angularly distributed mainly radially extending bayonet lips or wings arranged and adapted for being received in at least one circumferentially arranged recess of a corresponding filter bowl.

In a fifth aspect of the present disclosure, an adapter for a fluid filter assembly is disclosed, the fluid assembly comprising:
a. a filter bowl comprising an internal volume and a main opening for receiving a filter element, and
b. a filter head for receiving an incoming fluid flow and guiding it towards the fluid filtration media and for receiving an outgoing fluid flow from the filter element.
The adapter is adapted for releasable attachment to the filter head and adapted for coupling with the filter bowl and for connecting the filter bowl to the filter head.

In a sixth aspect of the present disclosure, a filter assembly is disclosed comprising:
a. a filter bowl comprising an internal volume and a main opening for receiving a filter element;
b. a filter element operably arranged within the filter bowl and comprising a fluid filtration media;
c. a filter head for receiving an incoming fluid flow and guiding it towards the fluid filtration media and for receiving an outgoing fluid flow from the filter element;
d. an adapter according to any of the embodiments of the fifth aspect.

### Short description of the drawings

These and further aspects of the present disclosure will be explained in greater detail by way of example and with reference to the accompanying drawings in which:
Figures 1, 2, 2a, 3, 4 and 5 illustrate a filter assembly according to a first preferred embodiment of the present disclosure.
Fig. 6 illustrates a filter assembly according to a second preferred embodiment of the present disclosure.
Fig. 7 to Fig. 10 illustrate a filter assembly according to a third preferred embodiment of the present disclosure.
Fig. 11 and Fig. 12 illustrate a filter assembly according to a fourth preferred embodiment of the present disclosure.
Fig. 13 illustrates a filter assembly according to a fifth preferred embodiment of the present disclosure.
Fig. 14 illustrates a filter assembly according to a sixth preferred embodiment of the present disclosure.
The drawings of the figures are neither drawn to scale nor proportioned. Generally, identical components are denoted by the same reference numerals in the figures.

### Detailed description of preferred embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiments of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

Although a number of the drawings presented and discussed below are specifically addressing embodiments of a filter element for filtering air, the present disclosure is not limited thereto.

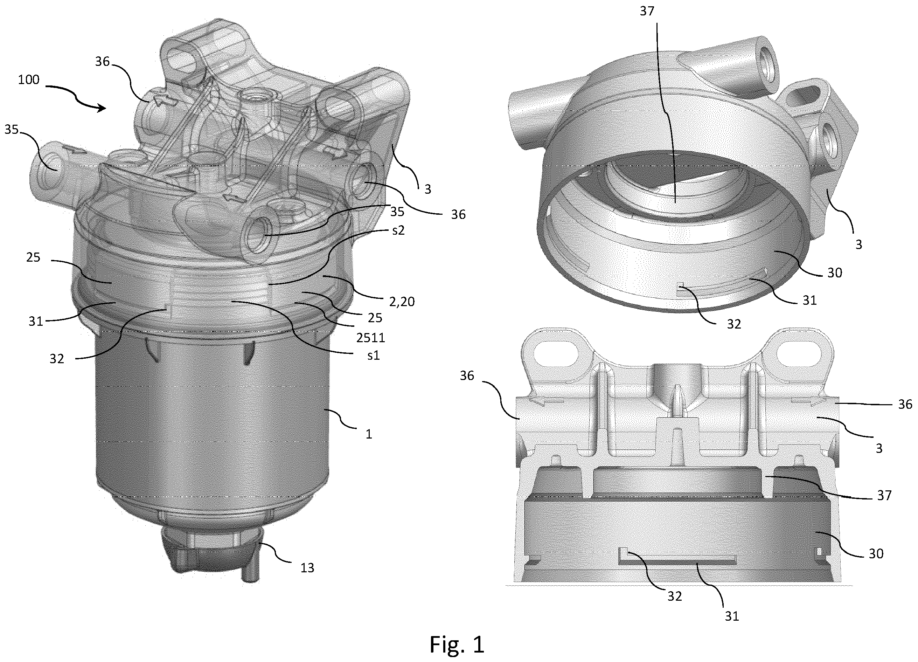

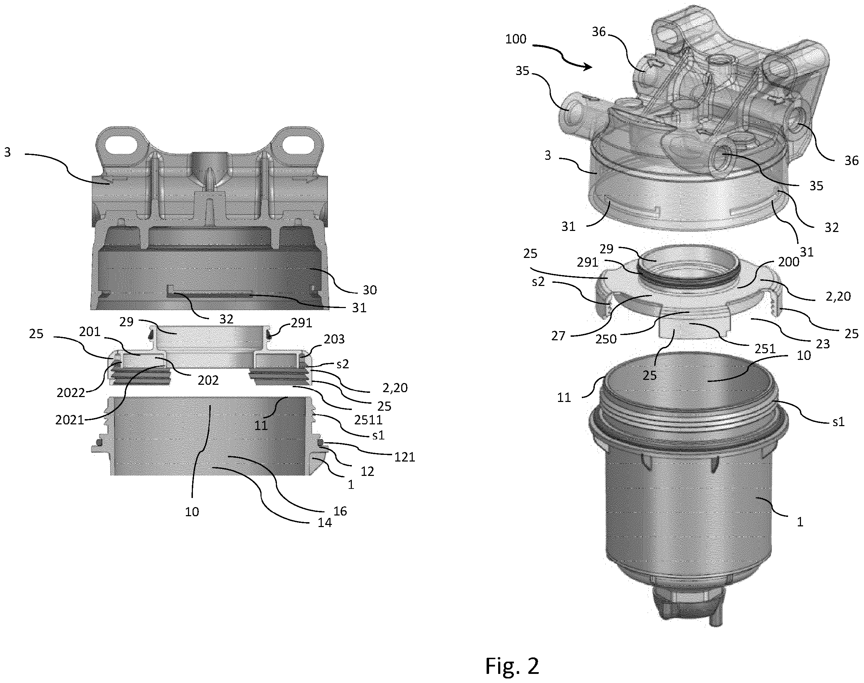

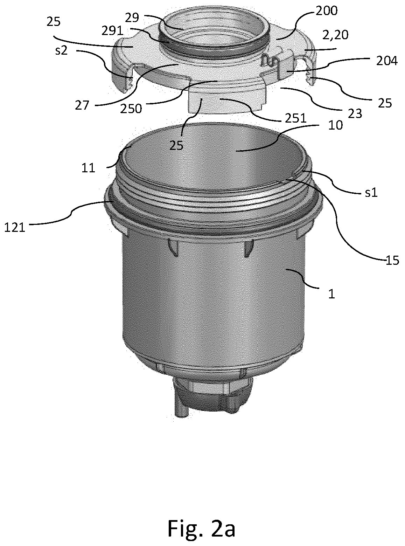

Figures 1 to 5 illustrate a first preferred embodiment of a filter assembly 100 of the present disclosure. The left design of Fig. 1 illustrates the assembly 100 in a fully mounted state, ready for operation. The right design of Fig. 1 illustrates details of the filter head 3. In each of the Figures 2 to 5, the left design is a cut view of a part of the assembly 100, while the right design is a 3D view of the same assembly 100 in the same state. Fig. 2 to Fig. 5 illustrate a preferred method for installing the filter cartridge 2.

The filter assembly 100 comprises a filter bowl 1, a filter cartridge or filter element 2 arranged in the bowl 1, and a filter head 3 connected to the filter bowl 1 in a fluid-tight manner. The connection between the filter bowl 1 and the filter head 3 is achieved by the filter element 2, preferably by the filter element only. This results in a system wherein the bowl 1 cannot be connected to the filter head 3 without a filter element 2.

The filter bowl 1 comprises an internal volume 16 and a main opening 10 for receiving the filter element or filter cartridge 2. The main opening 10 is arranged at a first axial end (or open axial end) of the filter bowl 1. The bowl 1 comprises an upper rim 11 limiting the main opening 10. Optionally, the filter bowl 1 comprises a water evacuation valve 13 at its closed axial end, arranged at an opposite side of the filter bowl 1. The filter bowl 1 further comprises an outer surface 12 and comprises a circumferential seal 121 circumferential to the bowl 1 or main opening 10. The circumferential seal 121 is provided on the outer surface 12 of the bowl 1, in a suitable position. The circumferential seal 12 is arranged to form a seal between the bowl 1 and the filter head when the bowl 1 is installed on the filter head 3 by means of the filter element 2.

The filter head 3 is adapted for receiving an incoming fluid flow, for instance via one or more inlets 35. The filter head is adapted for guiding the fluid towards the fluid filtration media 22 of the filter element, on the so-called dirty or unfiltered side of the filtration media 22. In operation, the fluid is forced to pass through the filtration media 22, towards the other side of the filtration media 22, the so-called clean or filtered side. The filter head 3 is further adapted for receiving an outgoing fluid flow from the clean side of the filter element 2, for instance by means of an outlet tube 37, to which the clean side of the filter element 2 is coupled in a fluid tight manner. The filter head 3 is further adapted to guide the outgoing fluid to one or more outlets 36. Via the outlets 36 the filtered fluid is provided to equipment that makes use of it. The filter head 3 does not comprise a thread or threaded connection means that could directly couple to the thread of the bowl 1.

The filter element 2 is operably arranged within the filter bowl 1 and comprises a first end cap 20. The first end cap 20 is connected in a fluid-tight manner to a first axial end 21 of a fluid filtration media 22 (not depicted in the Figures 1 to 5). The first end cap 20 is preferably an open end cap. Typically the filter element 2 also comprises a second end cap 20B at a second axial end 21B, which is typically closed and to which the second axial end 21B of the filtration media 22 is attached in a fluid-tight manner. The filter or filtration media 22 is preferably arranged in a tubular manner, and can for instance be pleated media arranged in a tubular manner.

The first end cap 20 is adapted for releasable attachment to the filter bowl 1 by means of a threaded connection comprising a first and a second complementary screw thread (s1, s2) provided on the filter bowl 1 and on the end cap 20/filter element 2 respectively.

The first screw thread s1 is provided at, adjacent to or abutting the main opening 10 of the bowl 1, surrounding it. The first screw thread s1 is complete. It is continuous and does not comprise any interruptions. It is directed radially outwardly.

The second screw thread 2 provided on the first end cap 20 is interrupted and non complete. It is directed radially inwardly.

The end cap 20 comprises a set of regularly angularly distributed and angularly separated radially extending threaded sectors 25 which comprise respective sections of the second screw thread s2. The sectors 25 alternate with a set of regularly distributed radial cut-outs 23. The end cap 20 comprises a central end cap portion 200, for instance a having a circular periphery. The regularly distributed radially extending threaded sectors 25 extend radially from the central end cap portion 200 by means of radial extending sector portions 250, and comprise an interrupted axially extending circumferential sidewall portion 251 comprising the interrupted second screw thread s2. The axially extending circumferential sidewall portion 251 is connected to an outer end of the radial extending sector portions 250. The axially extending circumferential sidewall portions 251 are arranged along a cylinder surface having an axis aligned with a longitudinal axis of the filter assembly 100 and/or a longitudinal axis of the filter bowl 1.

The filter bowl 1 has a cylindrical inner surface 14 and the radial cut-outs 23 of the end cap 20 of the filter element 2 extend radially inwardly beyond that inner surface 14, to thereby provide an entry path P for fluid into the bowl 1 and towards the filtration media 22.

The first end cap comprises an inner surface 201 (inner surface of the first axial wall). The inner surface 201 may comprise an axially extending ring-shaped cavity 202 adapted for receiving the first end 21of the fluid filtration media 22. The ring shaped 202 cavity can for instance comprise an outer circular rib or wall 2022 and an inner circular rib or wall 2021, which are arranged concentrically and are for instance separated by a distance slightly larger than the pleat height of the filtration media 22.

The radial distance measured in a direction perpendicular to a longitudinal axis of the filter element, between an outer surface of the outer circular rib 2022 and the second screw thread s2 is preferably within the range of 3 to 5 mm.

Preferably, the end cap 20 comprises a ring-shaped bowl-receiving cavity 203 for receiving an upper rim 11 of a predetermined filter bowl 1, preferably having complementary shape thereof.

The first end cap 20 is also adapted for releasable attachment to the filter head 3. In this embodiment, the filter head 3 and the filter element 2 are adapted for being attached by means of a bayonet-type connection system. The filter head 3 comprises a first part of a bayonet connection system, and the filter element 2 comprises a second part of the bayonet connection system.

The second part of the bayonet connection system is embodied by the lower rims 2511 of the regularly distributed radially extending sectors 25 of the end cap 20 of the filter element, for instance by the distal ends 2511 of the axially extending circumferential sidewall portions 251.

The first part of the bayonet connection system comprises corresponding radially inwardly extending ribs 31, which preferably end on respective stopper surfaces 33. The ribs 21 are arranged on a cylindrical inner surface 30 of the filter head 3. The number of ribs 31 is preferably equal to the number of sectors 25. For each rib 31 there is a corresponding sector 25, which cooperate in a bayonet fashion. The ribs 31 are arranged in a direction perpendicular to the longitudinal axis of the filter assembly 100 and/or a longitudinal axis of the filter bowl 1. At corresponding ends of the ribs 31, preferably a stopper surface 32 is provided to delimit the bayonet rotational movement. The stopper surface 32 extends in an axial direction of the bowl 1, perpendicular to the longitudinal direction of the rib 31, towards the outlet 37 of the filter head 3. In between adjacent ribs 31, openings are foreseen which allow respective sectors 25 to pass in the axial direction when initially inserting the end cap 20 (preferably already coupled to the bowl1) into the filter head 2 in a translational movement along the axis of the assembly 100, in fashion properly aligned with respect to the ribs 31.

Preferably, the bayonet connection system is adapted for providing a bayonet-type connection when the filter element 2 is rotated into the filter head 3 in the same direction in which the screw-on the filter bowl 1 onto the end cap 20 occurs, by means of the threaded connection.

Fig. 2 illustrates the component of the assembly 100 in disassembled state.

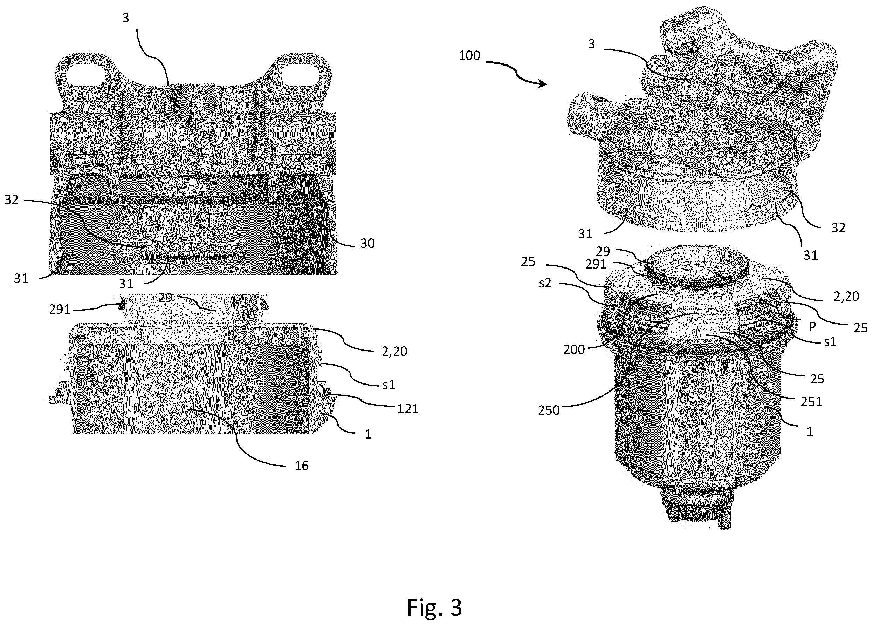

Fig. 3 to 5 illustrate a preferred method for installing the filter element 2 in the assembly 100. The filter 2, filter end cap 20 is screwed and attached to the bowl 1 in a first step by interaction of the screw threads s2 and s1. In preferred embodiments, the threaded connection is not complete at this initial stage. For instance, having one thread not engaged. Alternatively, the threaded connection can be final at this stage.

The filter element 2 in then pushed upwards into the filter head 3, having the sectors 25 of the filter element end cap 20 properly misaligned with the ribs 31 (their axial projections do not overlap) such that they can pass by a translational movement in the axial direction in between the respective ribs 31, over an axial distance such that the lower rims 2511 of the regularly distributed radially extending sectors 25 are positioned axially above the ribs 31. At that moment, an outlet tube 29 centrally arranged on the end cap 20 is sealing against the outlet tube 37 of the filter head. For instance, the outlet tube 29 enters the outlet tube 37 and seals against it radially outwardly by means of a seal 291 surrounding the outlet tube 29.

The filter element 2 can then be rotated relative to the filter head 2, about its longitudinal axis, such that the sectors 25 (the lower rims 2511 thereof) engage with the upper surface of the ribs 31, to create the bayonet coupling or attachment. The rotational movement is preferably limited in a predetermined manner by the stopper surfaces 32.

In preferred embodiments, the bayonet coupling is adapted to cause a compression of the seal 121 in between the filter bowl 1 and the filter head 3.

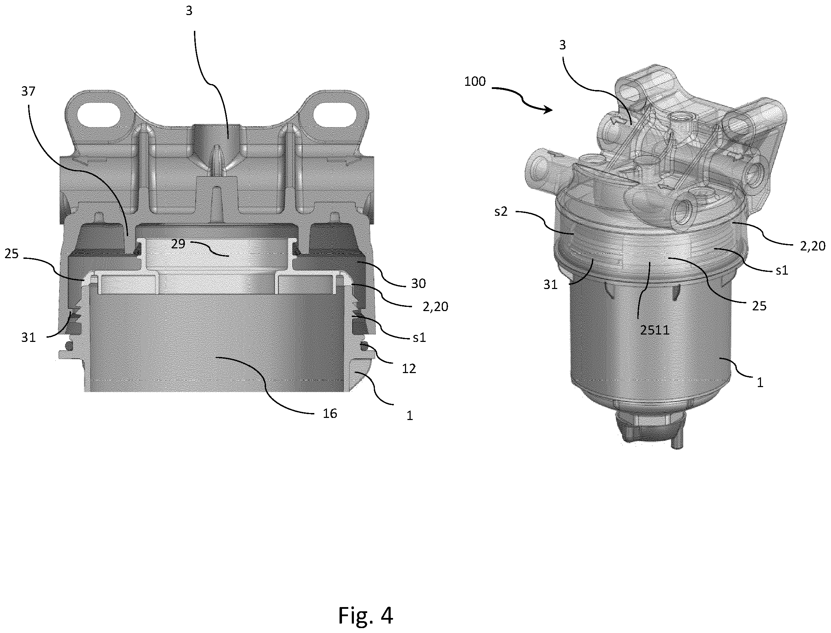

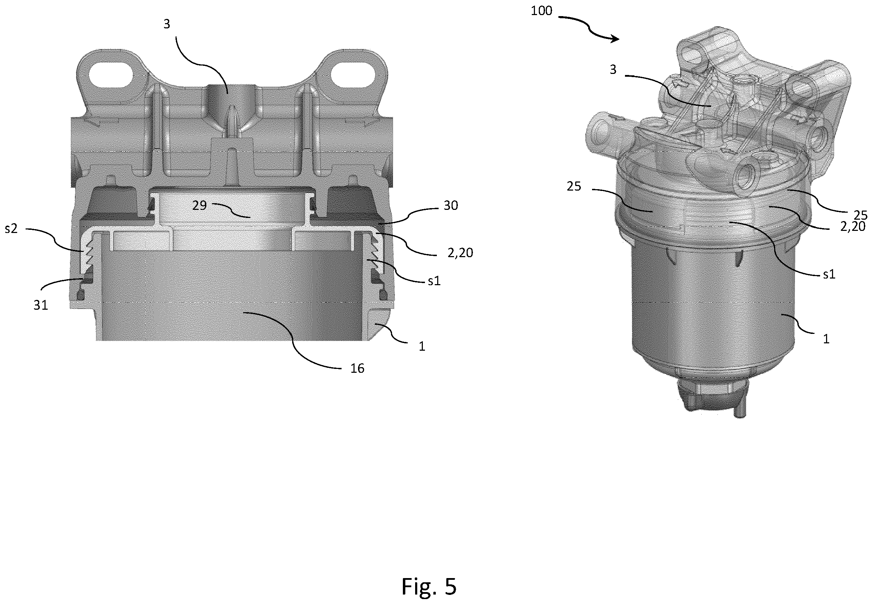

In alternative embodiments, the seal 121 in between the filter bowl 1 and the filter head 3 is not yet or not yet sufficiently compressed (Fig. 4). The assembly can then be predetermined such that it allows a further screw-on of the filter bowl 1 on the end cap 20 of the filter element 2, completing the threaded connection and compressing the seal 121 (Fig.5).

In order to replace the filter element, a rotation of filter element 2 relative to the filter head 2 is to be made, about its longitudinal axis, in the opposite direction, in order to release the bayonet coupling. The rotation in opposite direction is such that the sectors 25 of the filter element end cap 20 are again properly misaligned with the ribs 31 (their axial projections do not overlap) such that they can pass by a translational movement in the axial direction in between the respective ribs 31.

In preferred embodiments, the filter assembly is adapted such that a rotational force needed for removing the end cap from the filter head is smaller than a rotational force needed for removing the filter bowl from the end cap. In practice, the removal/replacement of the filter 2 occurs by manipulating/rotating the bowl 1 which is attached to it. In such embodiments, it can be avoided that the filter bowl 1 comes loose from the filter element 2, i.e., that the threaded connection releases, below a threshold force at which the bayonet coupling released. While it is not excluded to remove the filter bowl 1 from the filter element 2 first, it is less preferred for liquid filters as the filter element comprises liquid, and is thus dirty and difficult to handle.

Optionally, the end cap 20 can further be provided with a locking feature 204, preferably located at an outer periphery of the end cap 20, that is adapted for interacting with a locking slot 15 provided in the upper rim 11 of the bowl 1 (Fig. 2a), in such a way as to allow relative rotation between bowl 1 and filter element 2 in only one rotation direction, corresponding to the rotation direction for screwing on the bowl 1. A rotation of the bowl 1 in the relative opposite direction with respect to the filter element 2 (during unscrewing of the bowl 1), is directly, or after an initial angular extent of relative rotation, blocked by the locking slot 15. This mechanism can guarantee that, when rotating the bowl 1 to decouple the bayonet coupling of the end cap 20 with the head 3, the filter element 2 remains attached to the bowl 1 and not to the filter head 3. If the element would remain attached to the head, the intended release of the bayonet connection would be jeopardised. In order to remove the filer element 2 from the bowl 1 in a later step, the locking feature 204 can be lifted or otherwise moved out of the slot by for instance manual interaction. Preferably, the locking feature 204 is resilient or can be flexed.

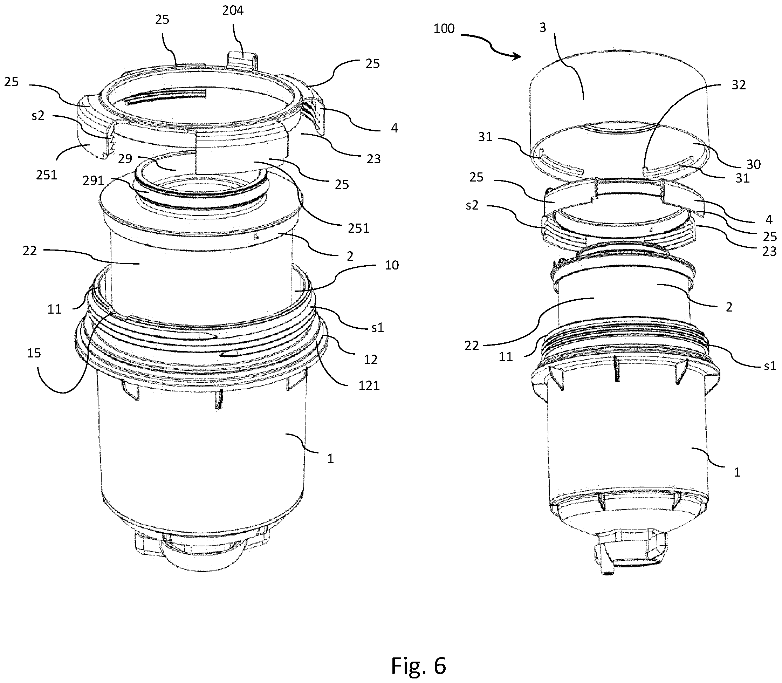

Fig. 6 illustrates a second preferred embodiment of the present disclosure. It discloses the use of an adapter 4 that is separate from a filter element 2 or from a first end cap 20 of a filter element 2, and that can be used to fit standard filter elements in filter housings/assemblies as described in relation with the first preferred embodiment and the first aspect of the present invention.

The filter assembly 100 comprises a filter bowl 1, a filter cartridge or filter element 2 arranged in the bowl 1, an adaptor 4 and a filter head 3 connected to the filter bowl 1 in a fluid-tight manner. The adaptor 4 is included within the internal volume defined by filter head 3 and filter bowl 1. The connection between the filter bowl 1 and the filter head 3 is achieved by the adaptor, preferably by the adapter only. This results in a system wherein the bowl 1 cannot be connected to the filter head 3 without an adaptor 4. The adaptor 4 is adapted for releasable attachment to the filter head 3 and adapted for coupling with the filter bowl 1 and for connecting the filter bowl 1 to the filter head 3 in a fluid tight manner. The adapter may or may not interact with the filter element 2. Preferably, the adaptor 4 can comprise a central portion 200 (instead of central end cap portion 200) which comprises a (open) ring structure comprising a central opening that allows the passage of an outlet tube 29 of a separate filter element 2 for connecting with an outlet tube 37 of the filter head 3. The features of the adaptor 4 can further be identical to the features of the end cap 20 described for any of the other embodiments without adaptor 4, in order to fit a corresponding filter assembly 100, and these combinations of features are hereby considered to be disclosed.

For instance, the adapter 4 can comprise a set of regularly angularly distributed and angularly separated radially extending threaded sectors 25 which comprise respective sections of the second screw thread s2. The sectors 25 alternate with a set of regularly distributed radial cut-outs 23. The adaptor 4 comprises a central adapter portion such as a (open) ring structure 200. The regularly distributed radially extending threaded sectors 25 extend radially from the central adaptor portion 200 by means of radial extending sector portions 250, and comprises an interrupted axially extending circumferential sidewall portion 251 comprising the interrupted second screw thread s2. The axially extending circumferential sidewall portion 251 is connected to an outer end of the radial extending sector portions 250. The axially extending circumferential sidewall portions 251 are arranged along a cylinder surface having an axis aligned with a longitudinal axis of the filter assembly 100 and/or a longitudinal axis of the filter bowl 1.

Optionally, adapter 4 can further be provided with a locking feature 204, preferably located at an outer periphery of the adapter 4, that is adapted for interacting with a locking slot 15 provided in the upper rim 11 of the bowl 1, in such a way as to allow relative rotation between bowl 1 and adaptor 4 in only one rotation direction, corresponding to the rotation direction for screwing on the bowl 1. A rotation of the bowl 1 in the relative opposite direction with respect to the adaptor 4 (during unscrewing of the bowl 1), is directly, or after an initial angular extent of relative rotation, blocked by the locking slot 15.
This mechanism can guarantee that, when rotating the bowl 1 to decouple the bayonet coupling of the adaptor 4 with the head 3, the adaptor 4 remains attached to the bowl 1 and not to the filter head 3. In order to remove the adaptor 4 from the bowl 1 in a later step, the locking feature 204 can be lifted or otherwise moved out of the slot by for instance manual interaction. Preferably, the locking feature 204 is resilient or can be flexed.

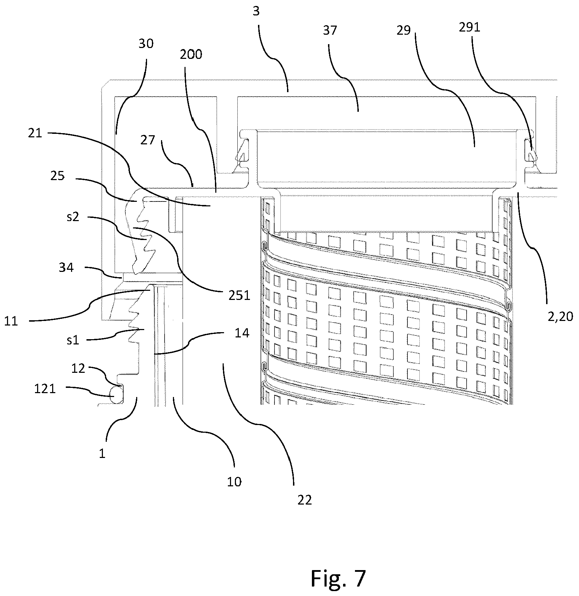

Fig. 7 to 10 illustrate a third preferred embodiment of the present disclosure, which is very similar to the first preferred embodiment described in relation with Fig. 1 to 5, but the filter head 3 and the filter element 2 are adapted for being attached by means of a snap-fit type connection system. The filter head 3 comprises a first part of a snap-fit connection system, and the filter element 2 comprises a second part of the snap-fit connection system. The outlet tube 37 of the filter head 3 is depicted only schematically and is supposed to be open.

As in the first preferred embodiment, the end cap 20 comprises a centrally positioned outlet tube 29 and a radially outwardly directed seal 291 surrounding it. The end cap 20 comprises a set of regularly angularly distributed radially extending threaded sectors 25 extending radially from a central end cap portion 200 comprising respective sections of the second screw thread s2, alternating with a set of regularly distributed radial cut-outs 23. The second part of the snap-fit connection system is embodied by the radially extending sectors 25 of the end cap 20 which are adapted and arranged to be at least partially radially resilient. Preferably, radially extending threaded sectors comprise respective mainly axially extending circumferential sidewall portions 251 comprising the interrupted second screw thread s2 and which 251 are resilient when deformed radially outwardly.

The filter bowl 1 has a cylindrical inner surface 14 and comprises radial cut-outs 23 in the end cap 20 extend radially inwardly beyond the inner surface 14, to thereby provide an entry path P for fluid into the bowl 1 and towards the filter media 22.

Preferably, the mainly axially extending circumferential sidewall portions 251 extend slightly radially inward and are adapted for receiving an upper rim 11 of the filter bowl 1 during installation. The upper rim 11 of the filter bowl 1 is adapted for biasing the mainly axially extending circumferential sidewall portions 251 to move outwardly and for instance become axially extending during installation. After attachment of the bowl 1 to the end cap 2 and indirectly to the filter head 3, the end cap 20 has opened up behind an undercut rim 34 embodying the first part of the snap fit connection. The undercut rim 34 is arranged on an inner surface 30 of the filter head 3.

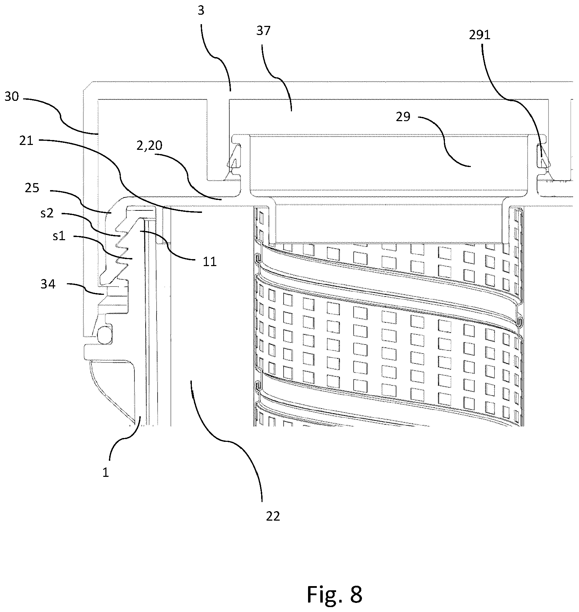

In embodiments of the third preferred embodiment, the filter element 2 is initially connected by the above described snap-fit-type connection to the filter head 3 (Fig. 7), whereby the mainly axially extending circumferential sidewall portions 251 are flexed and initially snap behind the undercut rim or rims 34. The filter bowl 1 is then screwed on to the filter 2 / end cap 20 to attach filter bowl 1 and filter element 2 by threaded connection, thereby also finally attaching the filter element 2 to the filter head 3 and providing a fluid tight attachment of the filter bowl 1 to the filter head 3 (Fig. 8).

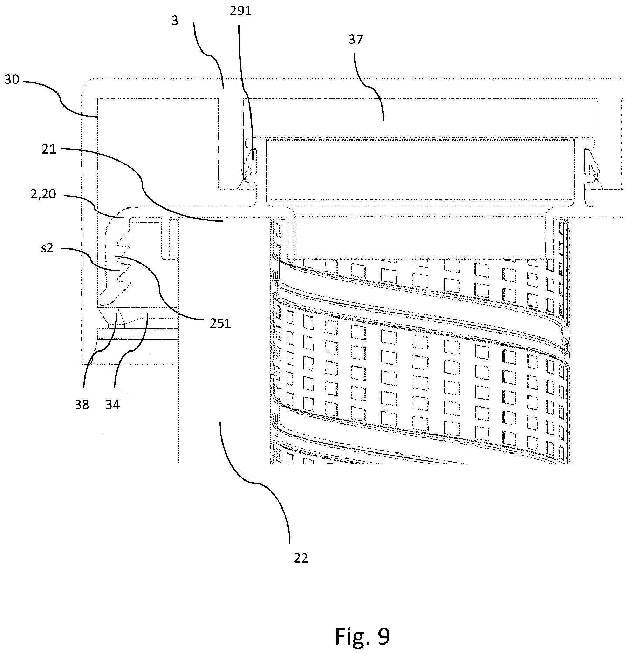

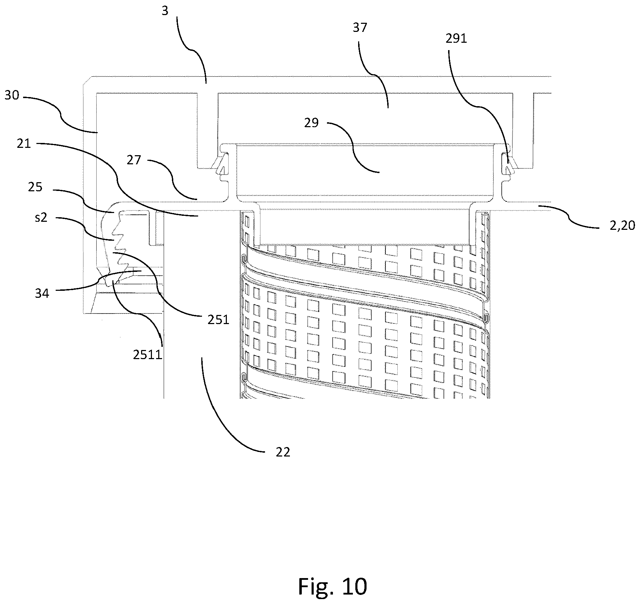

A detachment of the filter element 2 or filter element-bowl composite system from the filter head 3 occurs in a similar way as described for the bayonet de-coupling in relation to the first preferred embodiment. The undercut rims 34 thereby correspond to the ribs 31. The undercut rims 34 may further comprise one of more slanted/chamfered surfaces 38 to guide, preferably when exposed to a rotational force, the resilient axially extending circumferential sidewall portions 251 to an angular position in which the filter element 2 or filter element-bowl composite system can be removed by an axial pulling force without being hampered by the undercut rims 34 (Fig. 9, Fig. 10).

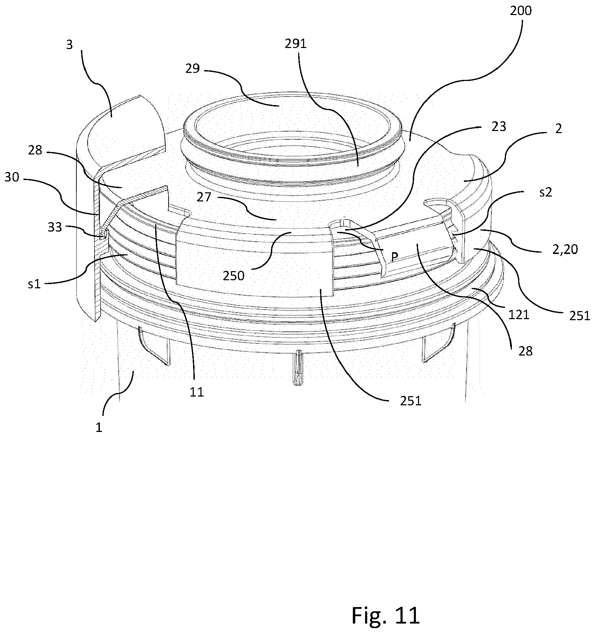

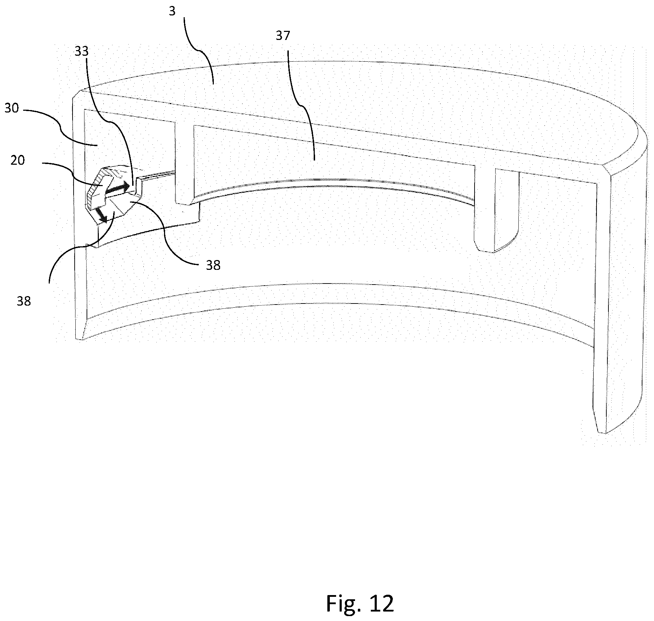

Fig. 11 and Fig. 12 illustrate a filter assembly 100 according to a fourth preferred embodiment of the present disclosure, in a schematic manner showing some characterising features only. This embodiment is also based on a bayonet-type connection between filter element 2 and filter head 3, but the end cap features of the bayonet coupling are separate from the radially extending sectors 25. The end cap 20 comprises a central outlet tube 29 with radially outward directed seal 291. It comprises a central endcap portion 200. From the central end cap portion 200, a set of regularly angularly distributed radially extending threaded sectors 25 are provided. The sectors 25 comprise respective sections of a screw thread s2. The regularly distributed radially extending threaded sectors 25 extend radially from the central adaptor portion 200 by means of radial extending sector portions 250, and comprise an interrupted axially extending circumferential sidewall portion 251 comprising the interrupted second screw thread s2. The second screw thread s2 is directed radially inwardly. The axially extending circumferential sidewall portions 251 are connected to outer ends of a respective radial extending sector portions 250. The axially extending circumferential sidewall portions 251 are arranged along a cylinder surface having an axis aligned with a longitudinal axis of the filter assembly 100 and/or a longitudinal axis of the filter bowl 1.

The regularly distributed radially extending threaded sectors 25 are angularly separated from and alternating with a set of regularly angularly distributed mainly radially extending bayonet lips or wings 28. regularly angularly distributed mainly radially extending bayonet lips or wings 28 also extend radially from the central end cap portion 200.

The bayonet lips or wings 28 are arranged and adapted for being received in at least one circumferentially arranged recess 33 of a corresponding filter head 3. The recesses can for instance be arranged on an inner side surface 30 of the filter bowl 1, and can be oriented with its opening towards the upper end of the filter head 3. The one or more recesses 33 may comprise one or more slanted/chamfered surfaces 38 to guide the bayonet lips 28, preferably when exposed to a rotational force, to an angular position in which the filter element 2 or filter element-bowl composite system can be removed from the head 3 by an axial pulling force without being hampered by the recesses 33.

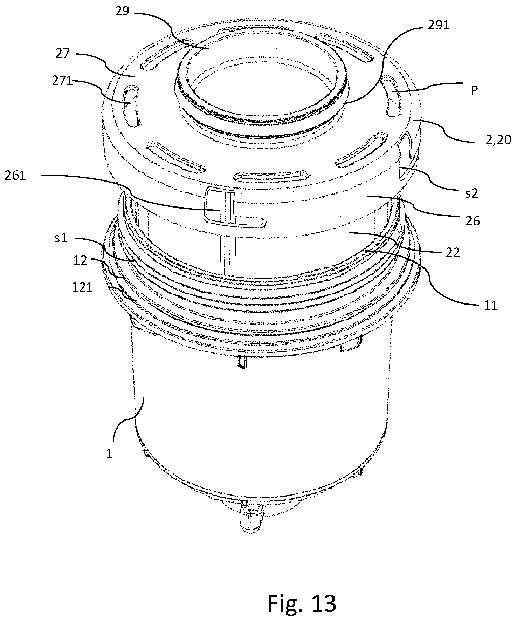

Fig. 13 illustrates a filter assembly 100 according to a fifth preferred embodiment of the present disclosure, which is also based on a bayonet-type connection between filter element 2 and filter head 3. The end cap 20 comprises a central outlet tube 29 with radially outward directed seal 291. Here, a first part of the bayonet connection system comprises radially inwardly extending protrusions arranged on a cylindrical inner surface 30 of the filter head 3 (not depicted). The second part of the bayonet connection system comprises openings or recesses 261 in a sidewall 26 of the first end cap 20 of the filter element 2 adapted and arranged for coupling with these protrusions of the filter head 3. An inner surface of the sidewall 26 comprises an interrupted screw thread s2 for making a threaded connection with the corresponding first screw thread 1 of the filter bowl 1.

The end cap 20 further comprises a plurality of fluid inlet openings 271 on an axial end face 27 of the first end cap 2, an axial projection of which is laying outside an axial projection of the fluid filtration media 22.

Also here, the filter assembly 100 comprises a filter bowl 1, a filter element 2 arranged in the bowl 1, and a filter head 3 connected to the filter bowl 1 (not depicted) in a fluid-tight manner. The connection between the filter bowl 1 and the filter head 3 is achieved by the filter element 2, preferably by the filter element only. This results in a system wherein the bowl 1 cannot be connected to the filter head 3 without a filter element 2.

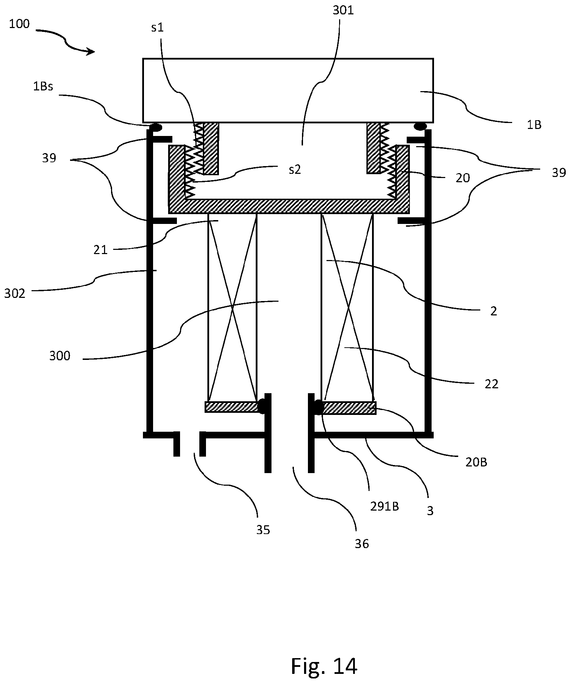

Fig. 14 illustrates a filter assembly according to a sixth preferred embodiment of the present disclosure. While the previous preferred embodiments are of the hanging type, the sixth preferred embodiment is a bowl/cartridge assembly of the standing type.

The fluid filter assembly 100 comprises a filter head 3 with an internal volume 300 and a main opening 301 for receiving the filter element 2. The filter head 3 is adapted for receiving an incoming fluid flow from an inlet 35 and guiding it towards the fluid filtration media 22, receiving an outgoing fluid flow from the filter element 2, and guiding the outgoing flow to an outlet 36. The assembly comprises a housing cover 1B which is complementary to the filter head 3.

The filter element 2 is operably arranged within the filter head 3 and comprises a first end cap 20 connected to the first end 21 of the fluid filtration media 22. The first end cap 20 is preferably a closed end cap. Alternatively, it can be an open endcap in the sense that it would comprise one or more openings or (radially inward) cut-outs in the area of the end cap laying radially outside of the area of the end cap 20 defined by the axial projection of the filter media 22 on the end cap 20. In the latter case, the end cap 20 may further comprise a central opening for receiving a bypass valve (and can comprise a bypass valve), for instance in the area of the end cap 20 laying radially within the projection of the axial projection of the filtration media 22 on the end cap 20. At the second end 21B of the filtration media 22 a second, open endcap 20B is provided, for instance having a seal 291B for sealing towards the outlet 36.

The assembly comprises a housing cover 1B. The first end cap 20 is adapted for releasable attachment to the filter head 3 and adapted for releasable attachment to the housing cover 1B and for, preferably in a sealing manner, connecting the housing cover 1B and the filter head 3.

The housing cover 1B and the end cap 20 are adapted for releasable attachment by means of a threaded connection comprising a first and a second complementary screw thread (s1, s2) provided on the housing cover 1B and on the end cap 20 respectively. In between the housing cover 1B and the filter head 3 a filter cover seal 1Bs is provided.

The first screw thread s1 is provided on a cylindrical projection projecting from an inner surface of the housing cover 1B. The first end cap 20 comprises an interrupted second screw thread s2 provided along interrupted sections of a cylindrical projection projecting from the end cap 20 in a direction away from the filtration media 22.

The first screw thread s1 is directed radially outwardly and the second, complementary screw thread s2 is directed radially inwardly.

The filter head 3 and the filter element 2 are adapted for being attached by means of a bayonet-type connection system. The filter head 3 comprises a first part of a bayonet connection system, and the filter element 2 comprises a second part of the bayonet connection system.

Similar to the previous embodiments, the end cap 20 can comprise a set of regularly angularly distributed radially extending threaded sectors 25 comprising respective sections of the second screw thread s2, alternating with a set of regularly distributed radial cut-outs 23 (not visible in Fig. 14). The sectors 25 can interact with bayonet features 39, depicted schematically, suitably arranged on the inner wall 302 of the filter head 3.

The second part of the bayonet connection system comprises a lower or upper rim of the set of regularly distributed radially extending sectors 25 of the end cap 1.

It is noted that not all the specific features described herein need to be incorporated in an arrangement for the arrangement to have some selected advantage according to the present disclosure.

For instance, the following could be claimed:
1. A fluid filter assembly comprising:
   - a filter housing for receiving a replaceable filter element;
   - a filter element operably arranged within the filter housing and comprising a first end cap connected to a first end of a fluid filtration media;
   wherein the filter housing comprises a first housing part and a second housing part; and wherein the first end cap is adapted for releasable attachment to the first housing part and adapted for releasable attachment to the second housing part and for, preferably in a sealing manner, connecting the first housing part and the second housing part.
2. A fluid filter assembly according to item 1, comprising:
   - a filter bowl corresponding to the first housing part and comprising an internal volume and a main opening for receiving the filter element;
   - the filter element operably arranged within the filter bowl and comprising the first end cap connected to the first end of a fluid filtration media;
   - a filter head, corresponding to the second housing part, for receiving an incoming fluid flow and guiding it towards the fluid filtration media and for receiving an outgoing fluid flow from the filter element;
   wherein the first end cap is adapted for releasable attachment to the filter head and adapted for releasable attachment to the filter bowl and for, preferably in a sealing manner, connecting the filter bowl to the filter head.
3. A fluid filter assembly according to item 2, wherein the filter bowl and the end cap are adapted for releasable attachment by means of a threaded connection comprising a first and a second complementary screw thread provided on the filter bowl and on the end cap respectively.
4. A fluid filter assembly according to item 3, wherein the first screw thread is provided at the main opening and wherein the first end cap comprises an interrupted second screw thread.
5. A fluid filter assembly according to item 3 or 4, wherein the first screw thread at the main opening is directed radially outwardly and the second screw thread is directed radially inwardly.
6. A fluid filter assembly according to any of the previous items 2 to 5, wherein the filter head and the filter element are adapted for being attached by means of a bayonet-type connection system, the filter head comprising a first part of a bayonet connection system, and the filter element comprising a second part of the bayonet connection system.
7. A fluid filter assembly according to item 6 and item 3, wherein the bayonet connection system is adapted for providing a bayonet-type connection when the filter element is rotated into the filter head in the same direction of screwing on the filter bowl onto the end cap by means of the threaded connection.
8. A fluid filter assembly according to item 6 or 7, wherein the first part of the bayonet connection system comprises radially inwardly extending ribs, preferably ending on a stopper surface, arranged on a cylindrical inner surface of the filter head.
9. A fluid filter assembly according to any of items 6 to 8, wherein the end cap comprises a set of regularly angularly distributed radially extending threaded sectors comprising respective sections of the second screw thread, alternating with a set of regularly distributed radial cut-outs, and wherein the second part of the bayonet connection system is embodied by a lower rim of the set of regularly distributed radially extending sectors of the end cap.
10. A fluid filter assembly according to item 9, wherein the filter bowl has a cylindrical inner surface and wherein the radial cut-outs extend radially inwardly beyond the inner surface, to thereby provide an entry path for fluid into the bowl and towards the filtration media.
11. A fluid filter assembly according to any of items 9 to 10, wherein the end cap comprises a central end cap portion, and wherein the regularly distributed radially extending threaded sectors extend radially from the central end cap portion and comprise an interrupted axially extending circumferential sidewall portion comprising the interrupted second screw thread.
12. A fluid filter assembly according to any of items 6 to 7, wherein the first part of the bayonet connection system comprises radially inwardly extending protrusions arranged on a cylindrical inner surface of the filter head and wherein the second part of the bayonet connection system comprises openings in a sidewall of the first end cap of the filter element adapted and arranged for coupling with the protrusions.
13. A fluid filter assembly according to item 12, further comprising a plurality of fluid inlet openings on an axial end face of the first end cap, an axial projection of which is laying outside an axial projection of the fluid filtration media.
14. A fluid filter assembly according to item 6 or 7, wherein the first part of the bayonet connection system comprises at least one circumferentially arranged recess with opening in an axial direction, arranged on a cylindrical inner surface of the filter head, and wherein the end cap comprises a set of regularly angularly distributed radially extending threaded sectors comprising respective sections of the second screw thread, angularly separated from and alternating with a set of regularly angularly distributed mainly radially extending bayonet lips or wings arranged and adapted for being received in the at least one circumferentially extending recess.
15. A fluid filter assembly according to any of the previous items 2 to 5, wherein the filter head and the filter element are adapted for being attached by means of a snap-fit type connection system, the filter head comprisinga first part of a snap-fit connection system, and the filter element comprising a second part of the snap-fit connection system.
16. A fluid filter assembly according to item 15, wherein the end cap comprises a set of regularly angularly distributed radially extending threaded sectors comprising respective sections of the second screw thread, alternating with a set of regularly distributed radial cut-outs, and wherein the second part of the snap-fit connection system is embodied by the radially extending sectors of the end cap which are adapted and arranged to be radially resilient.
17. A fluid filter assembly according to item 16, wherein the filter bowl has a cylindrical inner surface and wherein the radial cut-outs extend radially inwardly beyond the inner surface, to thereby provide an entry path for fluid into the bowl and towards the filter media.
18. A fluid filter assembly according to any of items 15 to 17, wherein the end cap comprises a central end cap portion, and wherein the regularly distributed radially extending threaded sectors extend radially from the central end cap portion and comprise respective mainly axially extending circumferential sidewall portions comprising the interrupted complementary thread, the axially extending sidewall portions being resilient when deformed radially outwardly.
19. A fluid filter assembly according to item 18, wherein the mainly axially extending circumferential sidewall portions extend slightly radially inward and are adapted for receiving an upper rim of the filter bowl during installation, wherein the upper rim of the filter bowl is adapted for biasing the mainly axially extending circumferential sidewall portions to become axially extending during installation, and wherein after attachment of the bowl to the end cap and indirectly to the filter head, the end cap has opened up behind an undercut rim embodying the first part of the snap fit connection, the undercut rim being arranged on an inner surface of the filter head.
20. A fluid filter assembly according to any of the previous items 2 to 19, wherein the end cap further comprises an outlet tube in fluid communication with an internal volume of the filter media, and a circumferential radial seal member arranged around the outlet tube.
21. A fluid filter assembly according to any of the previous items 2 to 20, wherein the filter bowl comprises an outer cylindrical surface and a comprises a radially directed seal adapted for sealing to the filter head when the filter bowl is fully connected to the filter head.
22. A fluid filter assembly according to any of the previous items 2 to 21, adapted such that a rotational force needed for attaching the end cap to the filter head is smaller than a rotational force needed for connecting the filter bowl to the end cap.
23. A fluid filter assembly according to any of the previous items 2 to 22, adapted such that a rotational force needed for removing the end cap from the filter head is smaller than a rotational force needed for removing the filter bowl from the end cap.
24. A fluid filter assembly according to any of the previous items, being of the hanging type.
25. A fluid filter assembly according to item 1, comprising:
   - a filter head corresponding to the second housing part and comprising an internal volume and a main opening for receiving the filter element, and for receiving an incoming fluid flow and guiding it towards the fluid filtration media and for receiving an outgoing fluid flow from the filter element;
   - the filter element operably arranged within the filter head and comprising the first end cap connected to the first end of a fluid filtration media;
   - a housing cover, corresponding to the first housing part, wherein the first end cap is adapted for releasable attachment to the filter head and adapted for releasable attachment to the housing cover and for, preferably in a sealing manner, connecting the housing cover to the filter head.
26. A fluid filter assembly according to item 26, wherein the housing cover and the end cap are adapted for releasable attachment by means of a threaded connection comprising a first and a second complementary screw thread provided on the housing cover and on the end cap respectively.
27. A fluid filter assembly according to item 26, wherein the first screw thread is provided on a cylindrical projection projecting from an inner surface of the housing cover and wherein the first end cap comprises an interrupted second screw thread provided along interrupted sections of a cylindrical projection projecting from the end cap in a direction away from the filtration media.
28. A fluid filter assembly according to item 26 or 27, wherein the first screw thread is directed radially outwardly, and the second screw thread is directed radially inwardly.
29. A fluid filter assembly according to any of the previous items 25 to 28, wherein the filter head and the filter element are adapted for being attached by means of a bayonet-type connection system, the filter head comprising a first part of a bayonet connection system, and the filter element comprising a second part of the bayonet connection system.
30. A fluid filter assembly according to any of items 25 to 29, wherein the end cap comprises a set of regularly angularly distributed radially extending threaded sectors comprising respective sections of the second screw thread, alternating with a set of regularly distributed radial cut-outs.
31. A fluid filter assembly according to item 30, wherein the second part of the bayonet connection system is embodied by a lower or upper rim of the set of regularly distributed radially extending sectors of the end cap and wherein the first part of the bayonet connection system is embodied by one or more bayonet features arranged on an inner surface of the filter head.
32. A fluid filter assembly according to any of items 25 to 31, being of the standing type.
33. A fluid filter element, comprising a first end cap connected to a first end of a fluid filtration media, wherein the first end cap comprises a set of regularly distributed radially extending sectors comprising sections of a thread, alternating with a set of regularly distributed radial cut-outs.
34. A fluid filter element according to item 34, wherein the thread is directed radially inwardly.
35. A fluid filter element according to 33 or 34, wherein the radial cut-outs extend from a circular periphery of the end cap towards the filtration media, and wherein an axial projection of the cut-outs remains outside of an axial projection of the filter media.
36. A fluid filter element according to any of the previous items 33 to 35, wherein the end cap comprises a central end cap portion, and wherein the regularly distributed radially extending sectors extend radially from the central end cap portion and comprise an interrupted axially extending circumferential sidewall portion comprising the thread.
37. A fluid filter element according to any of the previous items 33 to 36, wherein the regularly distributed radially extending sectors comprise first portions radially extending from the central end cap portion and second portions axially extending from outward ends of the first portions, in a direction towards the filtration media.
38. A fluid filter element according to item 37, wherein a radial distance measured in a direction perpendicular to a longitudinal axis of the filter element, between the central end cap portion and the second portions of the regularly distributed radially extending sectors is at least 5 mm (and less than 10 mm).
39. A fluid filter element according to any of the previous items 33 to 38, wherein the first end cap comprises an internal surface comprising an axially extending ring-shaped cavity adapted for receiving the first end of the fluid filtration media, the ring-shaped cavity comprising an outer circular rib and an inner circular rib, the outer and inner ribs being arranged concentrically.
40. A fluid filter element according to item 39, wherein a radial distance measured in a direction perpendicular to a longitudinal axis of the filter element, between an outer surface of the outer circular rib and the second screw thread is within the range of 3 to 5 mm.
41. A fluid filter element according to any of the previous items 33 to 40, wherein the end cap comprises a ring-shaped bowl-receiving cavity for receiving an upper rim of a predetermined filter bowl, preferably having complementary shape thereof.
42. A fluid filter element according to any of the previous items 33 to 41, wherein the end cap further comprises an outlet tube in fluid communication with an internal volume of the filtration media, and a circumferential radial seal member around the outlet tube.
43. A fluid filter element according to item 42, wherein an axial projection of the radial seal member lies within an axial projection of the central end cap portion.
44. A fluid filter element according to any of the previous items 33 to 43, wherein the filter element further comprises a second, closed end cap at a second end of the fluid filtration media.
45. A fluid filter element according to any of the previous items 33 to 44, wherein the fluid filter media is a pleated filter media arranged in a tubular configuration.
46. A fluid filter element according to any of the previous items 33 to 45, wherein the radially extending sectors of the first end cap are adapted and arranged to be radially resilient.
47. A fluid filter element according to item 46, wherein the end cap comprises a central end cap portion, and wherein the regularly distributed radially extending threaded sectors extend radially from the central end cap portion and comprise respective mainly axially extending circumferential sidewall portions comprising the interrupted complementary thread, wherein the mainly axially extending sidewall portions also extend slightly radially inwardly when moving to their respective distal free ends, and are resilient when deformed or bent radially outwardly.
48. A fluid filter element comprising a first end cap connected to a first end of a fluid filtration media; wherein the first end cap comprises a circumferential axially extending sidewall and wherein the sidewall comprises openings or recesses adapted and arranged for coupling with protrusions arranged on an internal wall of a corresponding filter bowl.
49. A fluid filter element according to item 48, comprising a screw thread on an internal surface of the sidewall.
50. A fluid filter element according to item 48 or 49, wherein an axial end face of the first end cap further comprises a plurality of fluid inlet openings, an axial projection of which is laying outside an axial projection of the fluid filtration media.
51. A filter element according to item 33 or 34, wherein the first end cap comprises an interrupted second screw thread provided along interrupted sections of a cylindrical projection projecting from the end cap in a direction away from the filtration media.
52. A fluid filter element comprising a first end cap connected to a first end of a fluid filtration media; wherein the end cap comprises a set of regularly angularly distributed radially extending threaded sectors comprising respective sections of a screw thread, angularly separated from and alternating with a set of regularly angularly distributed mainly radially extending bayonet lips or wings arranged and adapted for being received in at least one circumferentially arranged recess of a corresponding filter bowl.
53. An adapter for a fluid filter assembly, the fluid assembly comprising:
   a. a filter bowl comprising an internal volume and a main opening for receiving a filter element, and
   b. a filter head for receiving an incoming fluid flow and guiding it towards the fluid filtration media and for receiving an outgoing fluid flow from the filter element;
   wherein the adapter is adapted for releasable attachment to the filter head and adapted for coupling with the filter bowl and for connecting the filter bowl to the filter head.
54. A filter assembly comprising:
   a. a filter bowl comprising an internal volume and a main opening for receiving a filter element;
   b. a filter element operably arranged within the filter bowl and comprising a fluid filtration media;
   c. a filter head for receiving an incoming fluid flow and guiding it towards the fluid filtration media and for receiving an outgoing fluid flow from the filter element;
   d. an adapter according to item 53.

**REFERENCE NUMBERS**

| | |
|---|---|
| 100 | Filter assembly |
| 1 | Filter bowl |
| 1B | Filter cover |
| 1Bs | Filter cover seal |
| 10 | Main opening of the filter bowl |
| 11 | Upper rim |
| 12 | Outer surface of the bowl |
| 121 | Seal of bowl 1 or cover 1B |
| 13 | Water evacuation valve |
| 14 | Inner surface of the sidewall of the filter bowl |
| 15 | Locking slot |
| 16 | Internal volume |
| 2 | Filter element |
| 20 | First end cap |
| 20B | Second end cap |
| 200 | Central end cap portion |
| 201 | Internal surface of end cap |
| 202 | Ring shaped cavity |
| 2021 | Inner circular rib |
| 2022 | Outer circular rib |
| 203 | Bowl-receiving cavity |
| 204 | Locking feature |
| 21 | First axial end of fluid filtration media |
| 21B | Second axial end of fluid filtration media |
| 22 | Fluid filtration media |
| 23 | Radial cut-outs |
| 25 | Radially extending threaded sectors |
| 250 | Radially extending sector portion |
| 251 | Axially extending sidewall portion |
| 2511 | Distal free end |
| 26 | Sidewall of first end cap |
| 261 | Openings in sidewall of first end cap |
| 27 | Axial end face of first end cap |
| 271 | Inlet openings in the axial end face of first end cap |
| 28 | Bayonet lips or wings |
| 29 | Outlet tube of the filter element |
| 291 | Radial seal of outlet tube |
| 291B | Radial seal of second end cap |
| 3 | Filter head |
| 30 | Inner surface of the filter head |
| 300 | Inner volume of the filter head |
| 301 | Main opening of the filter head |
| 302 | Inner surface of filter head |
| 31 | Ribs |
| 32 | Stopper surface of ribs |
| 33 | Circumferential recess |
| 34 | Undercut rim |
| 35 | Inlet(s) of the filter head |
| 36 | Outlet(s) of the filter head |
| 37 | Outlet tube of the filter head |
| 38 | Chamfered/slanted surfaces |
| 39 | Bayonet features on the filter head |
| 4 | Adapter |
| P | Fluid entry path |
| s1, s2 | First/second screw thread |

## Claims

1. A fluid filter assembly comprising:
- a filter housing for receiving a replaceable filter element;
- a filter element operably arranged within said filter housing and comprising a first end cap connected to a first end of a fluid filtration media;
wherein said filter housing comprises a first housing part and a second housing part; and wherein said first end cap is adapted for releasable attachment to said first housing part and adapted for releasable attachment to said second housing part and for, preferably in a sealing manner, connecting said first housing part and said second housing part.

2. A fluid filter assembly according to claim 1, comprising:
- a filter bowl corresponding to said first housing part and comprising an internal volume and a main opening for receiving said filter element;
- said filter element operably arranged within said filter bowl and comprising said first end cap connected to said first end of a fluid filtration media;
- a filter head, corresponding to said second housing part, for receiving an incoming fluid flow and guiding it towards said fluid filtration media and for receiving an outgoing fluid flow from said filter element;
wherein said first end cap is adapted for releasable attachment to said filter head and adapted for releasable attachment to said filter bowl and for, preferably in a sealing manner, connecting said filter bowl to said filter head.

3. A fluid filter assembly according to claim 2, wherein said filter bowl and said end cap are adapted for releasable attachment by means of a threaded connection comprising a first and a second complementary screw thread provided on said filter bowl and on said end cap respectively.

4. A fluid filter assembly according to claim 3, wherein said first screw thread is provided at said main opening and wherein said first end cap comprises an interrupted second screw thread.

5. A fluid filter assembly according to claim 3 or 4, wherein said first screw thread at said main opening is directed radially outwardly and said second screw thread is directed radially inwardly.

6. A fluid filter assembly according to any of the previous claims 2 to 5, wherein said filter head and said filter element are adapted for being attached by means of a bayonet-type connection system, said filter head comprising a first part of a bayonet connection system, and said filter element comprising a second part of said bayonet connection system.

7. A fluid filter assembly according to claim 1, comprising:
- a filter head corresponding to said second housing part and comprising an internal volume and a main opening for receiving said filter element, and for receiving an incoming fluid flow and guiding it towards said fluid filtration media and for receiving an outgoing fluid flow from said filter element;
- said filter element operably arranged within said filter head and comprising said first end cap connected to said first end of a fluid filtration media;
- a housing cover, corresponding to said first housing part, wherein said first end cap is adapted for releasable attachment to said filter head and adapted for releasable attachment to said housing cover and for, preferably in a sealing manner, connecting said housing cover to said filter head.

8. A fluid filter assembly according to claim 7, wherein said housing cover and said end cap are adapted for releasable attachment by means of a threaded connection comprising a first and a second complementary screw thread provided on said housing cover and on said end cap respectively.

9. A fluid filter assembly according to any of the previous claims 7 or 8, wherein said filter head and said filter element are adapted for being attached by means of a bayonet-type connection system, said filter head comprising a first part of a bayonet connection system, and said filter element comprising a second part of said bayonet connection system.

10. A fluid filter element, comprising a first end cap connected to a first end of a fluid filtration media, wherein said first end cap comprises a set of regularly distributed radially extending sectors comprising sections of a thread, alternating with a set of regularly distributed radial cut-outs.

11. A fluid filter element according to claim 10, wherein said radially extending sectors of said first end cap are adapted and arranged to be radially resilient.

12. A fluid filter element comprising a first end cap connected to a first end of a fluid filtration media; wherein said first end cap comprises a circumferential axially extending sidewall and wherein said sidewall comprises openings or recesses adapted and arranged for coupling with protrusions arranged on an internal wall of a corresponding filter bowl.

13. A filter element according to claim 10, wherein said first end cap comprises an interrupted second screw thread provided along interrupted sections of a cylindrical projection projecting from said end cap in a direction away from said filtration media.

14. A fluid filter element comprising a first end cap connected to a first end of a fluid filtration media; wherein said end cap comprises a set of regularly angularly distributed radially extending threaded sectors comprising respective sections of a screw thread, angularly separated from and alternating with a set of regularly angularly distributed mainly radially extending bayonet lips or wings arranged and adapted for being received in at least one circumferentially arranged recess of a corresponding filter bowl.

15. An adapter for a fluid filter assembly, said fluid assembly comprising:
a. a filter bowl comprising an internal volume and a main opening for receiving a filter element, and
b. a filter head for receiving an incoming fluid flow and guiding it towards said fluid filtration media and for receiving an outgoing fluid flow from said filter element;
wherein said adapter is adapted for releasable attachment to said filter head and adapted for coupling with said filter bowl and for connecting said filter bowl to said filter head.
